# EUROPEAN PATENT APPLICATION

(11) **EP 4 611 086 A1**
(43) Date of publication of application: **03.09.2025**
(21) Application number: 25157491.9
(22) Date of filing: 12.02.2025
(51) Int. Cl.: H01M 10/04, H01M 10/0587, H01M 50/528, H01M 50/534

(54) **ELECTRODE FOR RECHARGEABLE BATTERY AND ELECTRODE ASSEMBLY**

(30) Priority: 29.02.2024 KR 20240030049
(71) Applicant: SAMSUNG SDI CO., LTD., Yongin-si, Gyeonggi-do 17084 (KR)
(72) Inventor: KIM, Hyunsoo, 17084 Yongin-si (KR); JEONG, Yoonjae, 17084 Yongin-si (KR); KO, Donghyuk, 17084 Yongin-si (KR)
(74) Representative: Marks & Clerk LLP

(57) **Abstract**

An electrode for a rechargeable battery is provided. The electrode includes a substrate having an electrode uncoated region and an electrode active region. An electrode tab is attached to the electrode uncoated region, and an active material layer is formed on the electrode active region. A tape is disposed between the electrode uncoated region and the electrode tab.

## Description

### BACKGROUND OF THE INVENTION

### (a) Field of the Invention

The present disclosure relates to an electrode assembly. More particularly, the present disclosure relates to an electrode for a rechargeable battery and an electrode assembly including the same.

### (b) Description of the Related Art

A rechargeable battery is a power storage system that converts electrical energy into chemical energy to store it with excellent energy density. Unlike a primary battery that may not be recharged, the rechargeable battery may be recharged, and it may be widely used in information technology (IT) devices such as a smartphone, a laptop computer, a tablet computer, and the like.

Recently, there has been an increased interest in electric vehicles due to problems such as environment degradation and fossil fuel depletion, and rechargeable batteries may be used as the batteries for the electric vehicles.

Rechargeable batteries may be divided into sheet-shaped laminated batteries and wound jelly roll types. In the case of wound-type rechargeable batteries, cracks may occur due to curvature of the battery structure.

An electrode tab may be a relatively rigid material compared to an electrode substrate, and the smaller the curvature is, the more easily cracks occur around the electrode tab. Particularly, as the electrode assembly expands according to the charge and discharge of the rechargeable battery, cracks occur more easily as the electrode tab is pushed.

The above-described information disclosed in the technology behind this disclosure is only intended to improve understanding of the background of the present disclosure, and may therefore include information that does not constitute conventional art.

### SUMMARY OF THE DISCLOSURE

The present disclosure provides an electrode for a rechargeable battery in which cracks are reduced when an electrode tab is attached to a position with small curvature, and an electrode assembly including the electrode.

An embodiment of the present disclosure provides an electrode for a rechargeable battery including: a substrate having an electrode uncoated region and an electrode active region; an electrode tab attached to the electrode uncoated region; an active material layer formed on the electrode active region; and a tape disposed between the substrate of the electrode uncoated region and the electrode tab (e.g. between the electrode uncoated region and the electrode tab).

A width of the substrate exposed between the active material layer and the tape may be 1.5 mm to 5 mm.

A width of the substrate exposed between the active material layer and the tape may be 5% to 30% of the width of the electrode uncoated region.

The tape may overlap 40% to 85% of a width of the electrode uncoated region.

A thickness of the tape may be equal to or greater than 20% of a thickness of the active material layer.

The tape may overlap the electrode tab by 5% or more of an entire length of the electrode tab.

An entire length of the tape may be equal to or less than an entire width of the substrate.

The electrode may be a positive electrode.

The electrode tab may be made of aluminium.

The tape may be made of polyimide.

The tape may be a lower tape and the electrode may further include an upper tape for covering the electrode tab, with the upper tape having an end portion disposed on the active material layer.

The upper tape may be thicker than the lower tape.

The active material layer may be disposed on opposite sides of the electrode uncoated region.

The electrode may further include an upper tape for covering the electrode tab and having an end portion disposed in the electrode uncoated region.

The upper tape is shorter than the width of the substrate such that the lower tape is exposed.

Another embodiment of the present disclosure provides an electrode assembly including: a first electrode formed of the electrode for a rechargeable battery; a second electrode overlapping the first electrode; and a separation film disposed between the first electrode and the second electrode, wherein the first electrode, the separation film, and the second electrode are wound.

At least some of the above and other features of the invention are set out in the claims.

According to the present disclosure, the lower tape is attached, and the electrode tab is attached to the lower tape to reduce the generation of cracks around the electrode tab. Accordingly, a safe electrode is provided for a rechargeable battery and an electrode assembly including the same.

### BRIEF DESCRIPTION OF THE DRAWINGS

The following drawings appended to the specification illustrate embodiments of the present invention to serve a technical concept of the present disclosure to be understood easily together with detailed descriptions of the present invention, so the present invention should not be meant to restrict the disclosure to the matters illustrated in the accompanying drawings.
FIG. 1 shows an electrode according to an embodiment.
FIG. 2 shows a cross-sectional view with respect to a line II-II' of FIG. 1.
FIG. 3 and FIG. 4 show a spread electrode according to another embodiment.
FIG. 5 shows a cross-sectional view of a cylindrical rechargeable battery according to an embodiment.

### DETAILED DESCRIPTION OF THE EMBODIMENTS

Hereinafter, embodiments of the present disclosure will be described in detail with reference to the accompanying drawings. Terms or words used in the present specification and claims, which will be described below, should not be interpreted as being limited to typical or dictionary meanings, but should be interpreted as having meanings and concepts which comply with the present disclosure, based on the principle that an inventor can appropriately define the concept of the terms to describe his/her own invention in the best manner. Therefore, configurations illustrated in the embodiments and the drawings described in the present specification are only the most preferred embodiment of the present disclosure and do not represent all of the present disclosure, and thus it is to be understood that various equivalents and modified examples, which may replace the configurations, are possible when filing the present application.

When used in the present specification, "comprise and include" and/or "comprising and including" may specify the existence of the mentioned shapes, numbers, steps, operations, members, elements and/or these groups, and may not exclude the presence or addition of one or more other shapes, numbers, movements, members, elements and/or groups.

To aid understanding of the disclosure, the attached drawings may not be drawn to actual scale, but the dimensions of some components may be exaggerated. The same reference number may be assigned to the same component in another embodiment.

Although first, second, etc. are used to describe various components, the components may not be limited by these terms. These terms are only used to distinguish one component from another, and unless specifically stated to the contrary, the first component may also be the second component.

Throughout the specification, unless otherwise stated, each component may be singular or plural.

As shown in the drawings, to describe the relationship between one element or feature and other element(s) or feature(s), for ease of description, spatial relative terms such as beneath, below, lower, above, upper, etc. may be used in the present specification. Spatially relative dispositions will be understood to encompass different directions of the device in use or operation in addition to the direction depicted in the figures. For example, if the drawing device is flipped, an element described as "below" or "bottom" another element may be understood to be "above" or "beyond" another element. Therefore, the term "down" may encompass both up and down directions.

It should be understood that if a component is described as "connected to" or "coupled to" another component, the components may be directly connected or accessed to each other, but other components may be "interposed" between the respective components, or the respective components may be connected, combined, or accessed to each other through other components.

The terms used in this specification are intended to describe embodiments of the present disclosure and are not intended to limit the present disclosure.

The rechargeable battery according to an embodiment will now be described in detail with reference to the accompanying drawings.

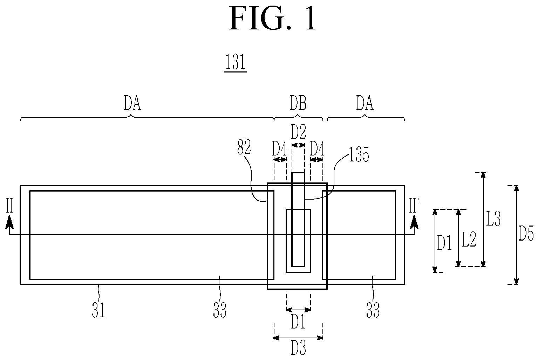

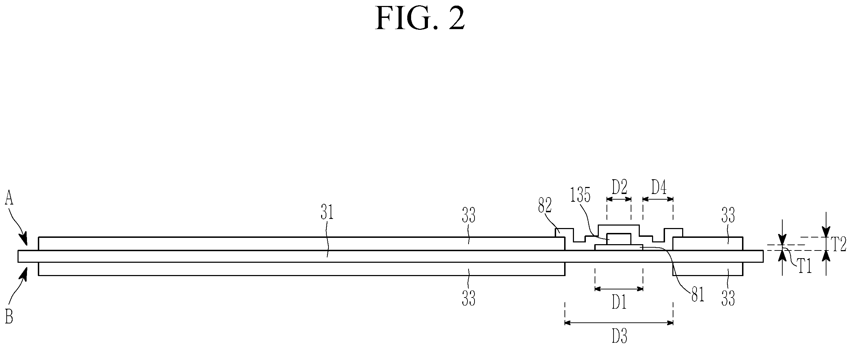

FIG. 1 shows an electrode according to an embodiment, and FIG. 2 shows a cross-sectional view with respect to a line II-II' of FIG. 1.

As shown in FIG. 1 and FIG. 2, a first electrode 131 (e.g. an electrode for a rechargeable battery) includes a first substrate 31 (e.g. a substrate), a first electrode active region DA (e.g. an electrode active region) including a first active material layer 33 (e.g. an active material layer) formed on a first substrate 31, and a first electrode uncoated region DB (e.g. an electrode uncoated region) in which the first active material layer 33 is not formed and the first substrate 31 is exposed.

A first electrode tab 135 (e.g. an electrode tab) is connected (e.g. attached) to the first electrode uncoated region DB. The first electrode tab 135 may be made of a same material as the substrate, e.g., aluminium.

The disposition of the electrode tab may be variable according to resistance and output of the electrode assembly, and as shown, the first electrode active region DA may be formed to be separated into a right portion and a left portion with respect to the first electrode tab. The first substrate 31 exposed between a separated gap may be the first electrode uncoated region DB.

A lower tape 81 may be attached to a portion below the first electrode tab 135. For example, a lower tape 81 may be disposed between a first surface A of the first substrate 31 and the first electrode tab 135, and the lower tape 81 may be attached to the first surface A of the substrate 31. The lower tape 81 may be made of polyimide. The lower tape 81 may reduce a step between the first electrode tab 135 and the first active material layer 33 due to a thickness of the lower tape 81. If the step between the first electrode tab 135 and the first active material layer 33 is significant, cracks may be caused by a volume expansion at the time of charge and discharge. An embodiment of the present disclosure may reduce the step and may accordingly reduce the generation of cracks when the volume expands because of the charge and discharge.

The first electrode tab 135 may be manufactured by a slitting process, thereby forming burrs on an edge of the first electrode tab 135. The burrs may protrude to damage the first substrate 31. In an embodiment of the present disclosure, the lower tape 81 prevents the burrs on the edge of the first electrode tab 135 from contacting the first substrate 31. That is, if pressure is applied to the burrs, the lower tape 81 absorbs the pressure to thus prevent the burrs from piercing and damaging the first substrate 31.

The lower tape 81 may be formed to be larger than the first electrode tab 135 and may extend so as to be higher than a protruding distance of the burrs. A width D1 of the lower tape 81 may be equal to or greater than twice a width D2 of the first electrode tab 135, and may be 40% to 85% of a width D3 of the first electrode uncoated region DB. A gap D4 between the lower tape 81 and first active material layer 33 may be 1.5 mm to 5 mm, and may be 5% to 30% of the width D3 of the first electrode uncoated region DB. A thickness T1 of the lower tape 81 may be 20% a thickness T2 of the first active material layer 33. Therefore, the step between the lower tape 81 and the first active material layer 33 may be equal to or less than 80% of the thickness T2 of the first active material layer 33. If the thickness T1 of the lower tape 81 is greater, the first electrode tab 135 may protrude from the first active material layer 33 and, thus, may not be easily wound as a result of the thickness T1 of the lower tape 81.

An entire length of the lower tape 81 may be equal to or less than an entire width D5 of the first substrate 31 and may overlap a portion of the first electrode tab 135. A length L2 by which the lower tape 81 overlaps the first electrode tab 135 may be equal to or greater than 5% of the entire length L3 of the first electrode tab 135.

An upper tape 82 may be attached to the first electrode tab 135. The upper tape 82 may cover the first electrode tab 135 and may protect the first electrode tab 135. An end portion of the upper tape 82 may be disposed on the neighboring first active material layer 33. The upper tape 82 may be attached to one or more parts of the lower tape 81 that are exposed between the first active material layer 33 and the first electrode tab 135 or on an upper surface of the first substrate 31. The upper tape 82 may more firmly attach the first electrode tab 135 to the first substrate 31. The upper tape 82 is shown to cover the electrode uncoated region and an end portion of the active material layer 33, but is not limited thereto.

The thickness of the upper tape may be greater than the thickness T1 of the lower tape 81, for example, the thickness of the upper tape 82 may be 20 µm to 50 µm, preferably 30 µm, and the thickness of the lower tape 81 may be 10 µm to 20 µm, preferably 18 µm.

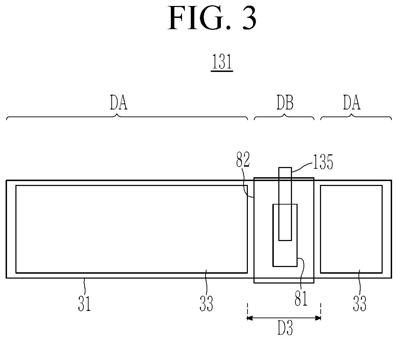

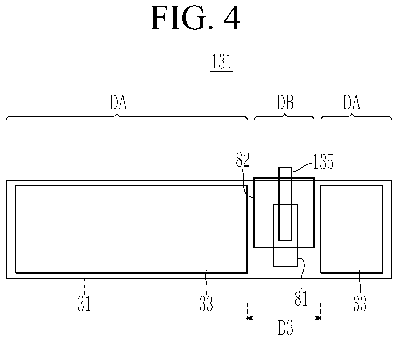

FIG. 3 and FIG. 4 show a spread electrode according to another embodiment.

As shown in FIG. 3 and FIG. 4, the upper tape 82 may be equal to or less than the width D3 of the electrode uncoated region DB. Therefore, the end portion of the active material layer 33 disposed on border of the electrode uncoated region DB may not be covered by the upper tape 82 and may be exposed. That is, the active material layer 33 may be spaced from the border of the upper tape 82.

As shown in FIG. 3, the upper tape 82 may be formed to have a greater length than the width of the substrate 31. Without being limited thereto, as shown in FIG. 4, the upper tape 82 may cover a portion of the electrode tab 135 and the lower tape 81. In particular, the upper tape 82 may cover the end portion of the electrode tab 135, and the lower tape 81 may be partly exposed.

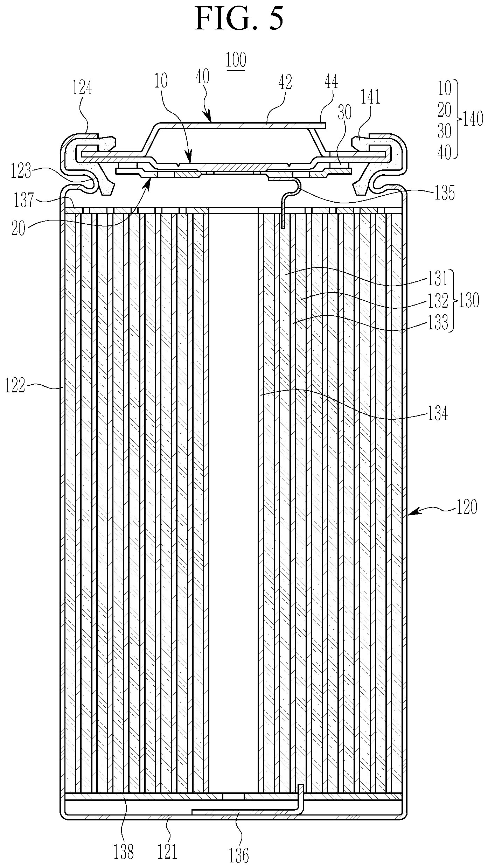

The first electrode of FIG. 1 and FIG. 2 may be used as the first electrode or the second electrode of the cylindrical rechargeable battery. This will now be described with reference to FIG. 5.

FIG. 5 shows a cross-sectional view of a cylindrical rechargeable battery according to an embodiment.

As shown in FIG. 5, the rechargeable battery 100 according to an embodiment may include a case 120, an electrode assembly 130 received in the case 120, and a cap assembly 140 assembled in an opening of the case 120 and sealing the case 120. The cap assembly 140 may include a safety vent 10 for preventing explosion of the rechargeable battery 100, and an upper cap 40 for covering the safety vent 10.

The electrode assembly 130 may include a first electrode 131, a separation film 133, and a second electrode 132 that are sequentially stacked. The electrode assembly 10 may be a cylindrical jelly roll generated by stacking the first electrode 131, the separation film 133, and the second electrode 132 and winding the same.

The first electrode 131 may be the electrode shown in FIG. 1 and FIG. 2, may include a first substrate and a first active material layer formed on the first substrate, and the first electrode 131 may be a positive electrode. The first substrate may include a first electrode uncoated region and a first electrode active region, and a positive electrode tab that is the first electrode tab 135 may be attached to the first electrode uncoated region.

The first substrate may be formed of a thin conductive metal plate and may be used as a current collector, for example, it may be aluminium.

A compound (e.g a lithiated intercalation compound) for allowing a reversible intercalation and deintercalation of lithium may be used as the positive active material forming the first active material layer. In detail, at least one of composite oxides of a metal selected from cobalt, manganese, nickel, aluminium, and combinations thereof, and lithium may be used. A content of the positive active material may be 90 wt% to 98 wt% of the entire weight of the positive active material layer.

The positive active material may further include a binder and a conductive material. The contents of the binder and the conductive material may respectively be 1 wt% to 5 wt% of the entire weight of the positive active material layer.

The binder may attach the positive active material particles to each other, and may attach the positive active material to the substrate that is a current collector. For example, the binder may use polyvinylalcohol, carboxylmethylcellulose, hydroxypropylcellulose, deacetylcellulose, polyvinylchloride, carboxylated polyvinyl chloride, polyvinylfluoride, ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, epoxy resin, and nylon, but is not limited thereto. The conductive material may provide conductive to the electrode, and any materials may be usable if they generate no chemical changes and they may be electron conductive materials, regarding the configured batteries.

The second electrode 132 may include a second substrate and a second active material layer formed on the second substrate. The second substrate may include a second electrode active region in which a second active material layer is formed, and a second electrode uncoated region in which the active material layer is not formed and the second substrate is exposed. A negative electrode tab that is a second electrode tab 136 may be connected to the second electrode uncoated region. The second electrode tab 136 may be made of nickel.

As shown in FIG. 1 and FIG. 2, regarding the second electrode, a lower tape may be attached to the second electrode uncoated region, and the second electrode tab 136 may overlap the lower tape. The second electrode 132 may be a negative electrode, and the second substrate may be made of a thin conductive metal plate and may be used as the current collector. For example, the second substrate 33 may be made of copper (Cu).

The negative active material of the negative active material layer may be a carbon-based active material. The carbon-based negative active material may be artificial graphite or a mixture of artificial graphite and natural graphite. If the artificial graphite or a crystalline carbon-based material that is the mixture of artificial graphite and natural graphite is used as the negative active material, a crystalline characteristic of particles may be further developed compared to the case of using an amorphous carbon-based active material, thereby further increasing an alignment characteristic of the carbon material in a polar plate on an external magnetic field, which is a merit. Shapes of the artificial graphite or the natural graphite may include an amorphous shape, a plate shape, a flake shape, a spherical shape, a fiber shape, and combinations thereof, and any types of other shapes. If the artificial graphite and the natural graphite are mixed and used, its mixture ratio may be 50:50 wt% to 95:5 wt%.

The negative active material layer may further include at least one of an Si-based negative active material, an Sn-based negative active material, and an LiMOₓ -based negative active material (wherein M is a metal). If the negative active material layer further includes them, for example, if it includes the carbon-based negative active material as the first negative active material and the negative active material as the second negative active material, the mixture ratio of the first negative active material to the second negative active material may be 50:50 to 99:1 weight ratio.

The LiMOₓ -based negative active material (wherein M is a metal), may be a lithium vanadium oxide.

The Si-based negative active material may include Si, a Si-C composite, a SiOₓ (0 < x < 2), and a Si-Q alloy (the Q is selected from among an alkali metal, an alkaline-earth metal, a Group 13 element, a Group 14 element, a Group 15 element, a Group 16 element, a transition metal, a rare earth element, and combinations thereof, and Si is not selected therefrom), and the Sn-based negative active material may include Sn, a SnO₂, and a Sn-R alloy (the R is selected from among an alkali metal, an alkaline-earth metal, a Group 13 element, a Group 14 element, a Group 15 element, a Group 16 element, a transition metal, a rare earth element, and combinations thereof, and Sn is not selected therefrom), and at least one of them and the SiO₂ may be mixed and used. The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The content of the negative active material on the negative active material layer may be 95 wt% to 99 wt% of the entire weight of the negative active material layer.

The negative active material may include a binder and may further optionally include a conductive material. The content of the binder in the negative active material may be 1 wt% to 5 wt% of the entire weight of the negative active material. If the conductive material is further included, 90 wt% to 98 wt% of the negative active material, 1 wt% to 5 wt% of the binder, and 1 wt% to 5 wt% of the conductive material may be used.

The binder may attach the negative active material particles to each other and may attach the negative active material to the negative electrode substrate. A nonaqueous binder, an aqueous binder, or a combination thereof may be used as the binder.

The nonaqueous binder may include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, and combinations thereof.

The aqueous binder may include styrene-butadiene rubber, acrylated styrene-butadiene rubber (SBR), acrylonitrile-butadiene rubber, acryl rubber, butyl rubber, ethylenepropyleneco polymer, polyepichlorohydrin, polyphosphazene, polyacrylonitrile, polystyrene, ethylenepropylene diene copolymer, polyvinylpyridine, chlorosulfonated polyethylene, latex, polyester resin, acryl resin, phenol resin, epoxy resin, polyvinyl alcohol, acrylate-based resin, and combinations thereof.

If the aqueous binder is used as the negative electrode binder, a cellulose-based compound for providing viscosity may be further included as a thickener. At least one of carboxylmethyl cellulose, hydroxypropylmethyl cellulose, methyl cellulose, or alkali metal salt thereof may be mixed and used as the cellulose-based compound. Na, K or Li may be used as the alkali metal. The content of using the thickener may be 0.1 parts by weight to 3 parts by weight with respect to the negative active material 100 parts by weight.

The conductive material is used to provide conductivity to the electrode, and any types of electron conductive materials generating no chemical changes are usable for the configured battery. Examples of the conductive material may include carbon-based materials including natural graphite, artificial graphite, carbon black, acetylene black, Ketjen black, and carbon fiber; metal-based materials such as metal powder or metal fiber including copper, nickel, aluminium, and silver; conductive polymers including a polyphenylene derivative; and conductive materials including mixtures thereof.

A Brunauer-Emmett-Teller (BET) specific surface area of the negative active material layer may be less than 3.0 m²/g, and may be 0.6 m²/g to 1.2 m²/g. It may be advantageous that the BET specific surface area of the negative active material layer is less than 3.0 m²/g because an electrochemical lifespan characteristic of cells may then be increased.

The BET may be measured by charging and discharging the lithium rechargeable battery including the negative electrode, disassembling the completely discharged battery to obtain a negative electrode, cutting the negative electrode by a predetermined size, putting the cut negative electrodes into a BET sample holder, and applying a nitrogen gas adsorption method thereto.

The negative electrode may have a cross-section loading level (L/L) of 6 mg/cm² to 65 mg/cm².

The separation film 133 may be disposed between the first electrode 131 and the second electrode 132 and may insulate them. Polyethylene, polypropylene, polyvinylidene fluoride, or a multilayer with at least two layers thereof may be used as the separation film 133, and mixed multilayers such as a two-layered separation film of polyethylene/polypropylene, a three-layered separation film of polyethylene/polypropylene/polyethylene, or a three-layered separation film of polypropylene/polyethylene/polypropylene may also be used.

The electrode assembly 130 may be wound with respect to a center pin 134 so the center pin 134 may be disposed in a center of the electrode assembly 130 and may be arranged in parallel to a direction in which the electrode assembly 130 is inserted into the case 120.

The center pin 134 having a circular pipe shape with an empty inside may allow a minimum transformation or may maintain the shape that is close to the shape prior to transformation if receiving a total compressing weight or a partial impact weight applied from the outside of the rechargeable battery. The center pin 134 may function as a passage for moving gas generated in an inside. The center pin 134 may be omitted if needed.

The center pin 134 may be made of a material with rigidity, for example, a conductive metal such as steel, a steel alloy, aluminium, or an aluminium alloy, so that it may be transformed to the minimum for the external impact. The center pin 134 may be conductive, so a first insulation plate 137 may be disposed between the upper cap 40 and the center pin 134 and a second insulation plate 138 may be disposed between a bottom portion 121 of the case 120 and the center pin 134 so that respective ends of the center pin 134 may be maintained to be insulated.

A penetration hole that the center pin 134 passes through, a penetration hole that the first electrode tab 135 passes through, and penetration holes through which an electrolyte is input may be formed in the first insulation plate 137. A penetration hole for the center pin 134 and a penetration hole for the second electrode tab 136 may be formed in the second insulation plate 138.

One side of the case 120 may be opened and the case 120 may have substantially the same shape as the electrode assembly 130 such that the electrolyte and the electrode assembly 130 may be inserted. The case 120 may include a circular bottom portion and a cylindrical lateral portion extending upward from the bottom portion by a predetermined length. An upper portion of the cylindrical case may be opened while the rechargeable battery is assembled.

Therefore, the electrode assembly may be inserted into the cylindrical case during the process for assembling a rechargeable battery, and the electrolyte solution may be injected into the cylindrical case. One side (upper side) of the case 120 may be opened during the process for manufacturing a rechargeable battery 100, and the electrode assembly 130 and the electrolyte may be received in the case 120. The case 120 may be made of steel, a steel alloy, aluminium, and an aluminium alloy.

The electrolyte may allow lithium ions generated by an electrochemical reaction to move in the first electrode and the second electrode in the battery. The electrolyte solution may be made of lithium salt such as LiPF₆ or LiBF₄ in an organic solvent such as ethylene carbonate (EC), propylene carbonate (PC), dimethyl carbonate (DEC), or ethyl methyl carbonate (EMC), or dimethyl carbonate (DMC). The electrolyte may be liquid, solid, or gel.

A beading portion 123 and a crimping portion 124 may be disposed on a lateral portion 122 of the case 120.

The beading portion 123 may be transformed to be concave toward the inside of the case 120, and the crimping portion 124 may be transformed so that an edge of the lateral portion 122 may be bent toward the inside. A movement of the electrode assembly 130 may be suppressed by the beading portion 123, and the cap assembly 140 may be fixed to the case 120 by the crimping portion 124.

The cap assembly 140 may include a safety vent 10 for preventing an explosion of the rechargeable battery 100, and an upper cap 40 for covering the safety vent 10.

The cap assembly 140 may include a safety vent 10 including a notch groove, a cap-down 20 disposed on one side (lower side) of the safety vent 10 facing the electrode assembly 130, a ring-type insulator 30 disposed between the safety vent 10 and the cap-down 20, and an upper cap 40 disposed on one side (upper side) of the safety vent 10 that is opposite the cap-down 20. The safety vent 10 may be referred to as a current interruptive device (CID).

The first electrode tab 135 of the electrode assembly 130 may be fixed to a first surface (lower surface) of the lower cap 20, and the lower cap 20, the safety vent 10, and the upper cap 40 may be charged with the positive electrode. The first electrode tab 135 may be bent to face the first surface of the lower cap 20 to thereby increase a contact area with the lower cap 20.

The upper cap 40 may protrude outside of the rechargeable battery 100 to function as a positive electrode terminal for contacting an external device and flowing the current, and the upper cap 40 may have a planar surface.

The second electrode tab 136 may be connected to the second electrode uncoated region and may be fixed to a lower bottom surface of the case 120 by welding. Thus, the second electrode tab 136 may protrude in an opposite direction to the first electrode tab 135. Therefore, the case 120 may be charged with the negative electrode, and the bottom portion 121 of the case 120 may function as the negative terminal.

The cap assembly 140 may be combined to the lateral portion 122 of the case 120 with the insulation gasket 141 as a medium. The insulation gasket 141 may surround edges of the safety vent 10 and the upper cap 40. The insulation gasket 141 may be compressed between the beading portion 123 and the crimping portion 124 of the case 120.

While the rechargeable battery 100 is used, gas may be generated in the case 120 because of many factors. And an internal pressure of the rechargeable battery 100 may be increased by the gas. If the gas is generated, a pressure may be continuously applied to the safety vent 10 through an opening of the lower cap 20, the safety vent 10 may be transformed toward the external side (or upper side) of the cap assembly 140 at a specific pressure, and the safety vent 10 may be separated from the lower cap 20.

The current flow may be prevented by the separation of the safety vent 10 and the lower cap 20. If the pressure is continuously increased, the notch of the safety vent 10 may be fractured and the internal gas may be discharged. The internal gas may be discharged to outside of the rechargeable battery 100 through an exhaust hole formed in the upper cap 40.

**Table 1 shows data generated by measuring cracks according to an embodiment of the present disclosure and a comparative example.**

| | Distance D4 between tape and active material layer | Covered amount D1 of uncoated region in width direction | Horizontal cracks | Vertical cracks |
|---|---|---|---|---|
| Embodiment 1 | 5mm | 44% | Not generated | Not generated |
| Embodiment 2 | 1.5mm | 83% | Not generated | Not generated |
| Comparative Example | -2.5mm | 100% | Generated | Not generated |

In particular, Table 1 shows the measured generation of cracks for Embodiments 1 and 2 and the comparative example in the cylindrical electrode assembly of the rechargeable battery shown in FIG. 3 to FIG. 5. Regarding the cracks of the active material layer, vertical cracks that are in the length direction of the lower tape and horizontal cracks that are in the width direction of the lower tape may be generated according to the motion so the generation of cracks according to the respective directions may be measured. In the embodiments 1 and 2, the gaps between the lower tape and the active material layer were, respectively 5mm and 1.5mm, and the lower tape overlapped the electrode uncoated region by the ratios of 44% and 83% of the width of the electrode uncoated region. In the comparative example, there was no gap between the lower tape and the active material layer, and the lower tape overlapped the neighboring active material layer by 2.5mm. Therefore, the entire (100%) width of the electrode uncoated region was covered with the lower tape.

Referring to Table 1, it can be seen that the vertical cracks were not generated in the embodiment and the comparative example, the horizontal cracks were not generated if the gap between the lower tape and the active material layer is maintained as in the embodiments 1 and 2, and the horizontal cracks are generated if there is no such gap as in the comparative example.

While this disclosure has been described in connection with what is presently considered to be practical embodiments, it is to be understood that the disclosure is not limited to the disclosed embodiments. On the contrary, is intended to cover various modifications and equivalent arrangements included within the scope of the appended claims.

**<Description of symbols>**

| | | | |
|---|---|---|---|
| 100: | rechargeable battery | 120: | case |
| 130: | electrode assembly | 131: | positive electrode |
| 132: | negative electrode | 133: | separation film |
| 135: | first electrode tab | 136: | second electrode tab |

## Claims

1. An electrode for a rechargeable battery, the electrode comprising:
a substrate having an electrode uncoated region and an electrode active region;
an electrode tab attached to the electrode uncoated region;
an active material layer formed on the electrode active region; and
a tape disposed between the substrate of the electrode uncoated region and the electrode tab.

2. The electrode as claimed in claim 1, wherein a width of the substrate exposed between the active material layer and the tape is 1.5 mm to 5 mm.

3. The electrode as claimed in claim 1 or claim 2, wherein a width of the substrate exposed between the active material layer and the tape is 5% to 30% of the width of the electrode uncoated region.

4. The electrode as claimed in any one of claims 1 to 3, wherein the tape overlaps 40% to 85% of a width of the electrode uncoated region.

5. The electrode as claimed in any one of claims 1 to 4, wherein a thickness of the tape is equal to or greater than 20% of a thickness of the active material layer.

6. The electrode as claimed in any one of claims 1 to 5, wherein the tape overlaps the electrode tab by 5% or more of an entire length of the electrode tab.

7. The electrode as claimed in any one of claims 1 to 6, wherein an entire length of the tape is equal to or less than an entire width of the substrate.

8. The electrode as claimed in any one of claims 1 to 7, wherein the electrode tab is made of aluminium.

9. The electrode as claimed in any one of claims 1 to 8, wherein the tape is made of polyimide.

10. The electrode as claimed in any one of claims 1 to 9, wherein the tape is a lower tape, and the electrode further comprises an upper tape for covering the electrode tab, with the upper tape having an end portion disposed on the active material layer.

11. The electrode as claimed in any one of claims 1 to 9, wherein the tape is a lower tape, and the electrode further comprises an upper tape for covering the first electrode tab and having an end portion disposed in the first electrode uncoated region.

12. The electrode as claimed in claim 10 or claim 11, wherein the upper tape is shorter than the width of the substrate such that the lower tape is exposed.

13. The electrode as claimed in any one of claims 10 to 12, wherein the upper tape is thicker than the lower tape.

14. The electrode as claimed in any one of claims 1 to 13, wherein the active material layer is disposed on opposite sides of the electrode uncoated region.

15. An electrode assembly comprising:
a first electrode according to any one of claims 1 to 14;
a second electrode overlapping the first electrode; and
a separation film disposed between the first electrode and the second electrode,
wherein the first electrode, the separation film, and the second electrode are wound.
